# EUROPÄISCHE PATENTSCHRIFT

(11) **EP 4 185 479 B1**
(45) Veröffentlichungstag und Bekanntmachung des Hinweises auf die Patenterteilung: **25.10.2023**
(21) Anmeldenummer: 22744465.0
(22) Anmeldetag: 14.07.2022
(51) Int. Cl.: C21D 1/25, C21D 1/40, F16F 1/02, F16F 1/14, C21D 9/02, C21D 9/08, C22C 38/00, C22C 38/04, B60G 21/055

(54) **ROHRSTABILISATOR FÜR EIN FAHRZEUGFAHRWERK UND EIN FAHRZEUGFAHRWERK UMFASSEND DEN ROHRSTABILISATOR**
TUBULAR STABILIZER BAR FOR A VEHICLE CHASSIS, AND VEHICLE CHASSIS COMPRISING THE TUBULAR STABILIZER BAR
BARRE STABILISATRICE TUBULAIRE POUR CHÂSSIS DE VÉHICULE, ET CHÂSSIS DE VÉHICULE COMPRENANT LA BARRE STABILISATRICE TUBULAIRE

(30) Priorität: 27.07.2021 DE 102021208073
(43) Veröffentlichungstag der Anmeldung: 31.05.2023
(73) Patentinhaber: ThyssenKrupp Federn und Stabilisatoren GmbH, 58119 Hagen (DE); thyssenkrupp AG, 45143 Essen (DE)
(72) Erfinder: WESTERHOFF, Karsten, 45525 Hattingen (DE); SCHNEIDER, Frank, 44229 Dortmund (DE); FRERICKS, Diana, 58119 Hagen (DE); GROPP, Mario, 38871 llsenburg (DE); BOLAT, Gökhan, 9492 Eschen (LI)
(74) Vertreter: thyssenkrupp Intellectual Property GmbH
(86) Internationale Anmeldenummer: PCT/EP2022/069820
(87) Internationale Veröffentlichungsnummer: WO 2023/006442

(56) Entgegenhaltungen:
- WO-A1-2020/235756
- JP-A- H0 789 325
- JP-A- 2019 059 980
- US-A- 5 236 520

## Beschreibung

Die vorliegende Erfindung betrifft einen Rohrstabilisator für ein Fahrzeugfahrwerk und ein Fahrzeugfahrwerk umfassend den Rohrstabilisator.

### Stand der Technik

Rohrstabilisatoren aus umgeformtem Stahlrohr sind im Stand der Technik in einer Vielzahl von Ausführungsformen bekannt. Rohrstabilisatoren werden beispielsweise auch als Drehstäbe, Stabilisierungsdrehstäbe oder Torsionsfederstäbe bezeichnet. Eingesetzt werden Stahlfedern und Rohrstabilisatoren insbesondere in Kraftfahrzeugen, wobei Stahlfedern beispielsweise in Feder- /Dämpfungssystemen zur Abfederung von Fahrbahnunebenheiten und Rohrstabilisatoren zur Stabilisierung gegen Wanken bei Kurvenfahrt eines Kraftfahrzeugs, Fahrten eines Kraftfahrzeugs über wechselnde Fahrbahnoberflächen und bei Fahrbahnunebenheiten eingesetzt werden. Solche Stabilisatoren sind üblicherweise im Bereich der Vorder- und der Hinterachse angeordnet und erstrecken sich zumeist über die gesamte Breite des Fahrzeugs. Die Formgebung des Stahlrohres oder Stahldrahts zu Federn und Drehstäben kann nach im Stand der Technik bekannten Umformverfahren erfolgen. Vor oder nach dieser Formgebung kann das Stahlrohr oder der Stahldraht verschiedene Vorbereitungsschritte erfahren, welche die Feder- und Festigkeitseigenschaften beeinflussen und weitere bestimmte Gebrauchseigenschaften eines Werkstoffs verbessern. So können Federn und/oder Drehstäbe mit hoher/n Festigkeit(en) bei vergleichsweise geringem Materialeinsatz und somit geringem Gewicht und Materialkosten hergestellt werden. Hierbei weisen Rohrfedern im Vergleich zu Stabfedern ein geringeres Gewicht bei gleichen Federeigenschaften auf, die Steifigkeit und Biegefähigkeit bei Rohrstabilisatoren ist abhängig von dem Durchmesser und der Wanddicke. Eine Vergrößerung des Durchmesser-Wanddicken-Verhältnisses zugunsten einer größeren Gewichtseinsparung ist jedoch aufgrund einer verminderten Biegefähigkeit durch die während der Formgebung und im Betrieb des Bauteils verursachten höheren Innenspannungen nur in einem begrenzten Bereich möglich. Somit sind die Eigenschaften von Rohrstabilisatoren auf einen engen Bereich an geometrischen Abmessungen und den daraus resultierenden Federeigenschaften begrenzt bzw. ist die Umformbarkeit des Stahlrohres oder Stahldrahtes bei einigen im Stand der Technik bekannten Umformverfahren begrenzt. Insbesondere stehen die Parameter Festigkeit und Zähigkeit im Zusammenhang mit dem Umformvermögen und der Lebensdauer eines Rohrstabilisators.

JP H07 89325 A offenbart einen hohlen Stabilisator nach dem Oberbegriff des Anspruchs 1, für einen großen LKW oder einen Bus.

JP 2019 059980 A offenbart ein Stahlrohr für einen Torsionsträger.

WO 2020 235756 A1 offenbart ein Federstahlmaterial, das ohne Anlassprozess verwendet werden kann.

US 5 263 520 A offenbart einen Stabilisator aus hochfestem Stahl.

Der vorliegenden Erfindung liegt daher die Aufgabe zugrunde, einen verbesserten Rohrstabilisator für Fahrzeuge und/oder ein verbessertes Fahrzeugfahrwerk umfassend einen Rohstabilisator bereitzustellen, bei welchem die zuvor genannten Nachteile vermieden werden. Insbesondere soll mit diesem verbesserten Rohrstabilisator für Fahrzeuge und/oder dem verbesserten Fahrzeugfahrwerk eine Steigerung der Lebensdauer, insbesondere der Lebensdauerwerte bei dynamischen Prüfung sowie eine Verringerung der Streuung von Lebensdauerergebnissen ermöglicht werden.

### Offenbarung der Erfindung

Diese Aufgabe wird mit einem Rohrstabilisator nach Anspruch 1 und einem Fahrzeugfahrwerk nach Anspruch 7 gelöst.

Der erfindungsgemäße Rohrstabilisator für ein Fahrzeugfahrwerk weist gegenüber konventionellen Rohrstabilisator den Vorteil einer längeren Lebensdauer auf. Zudem können bei dem erfindungsgemäßen Rohrstabilisator Eigenschaften, insbesondere die Steifigkeit und Biegesteifigkeit bedarfsgerecht hergestellt werden.

Gegenstand der Erfindung ist daher ein Rohrstabilisator für ein Fahrzeugfahrwerk, hergestellt aus einem Metallrohrkörper, umfassend einen Torsionsfederabschnitt, zwei von dem Torsionsfederabschnitt abgebogene Schenkel und einen zwischen dem Torsionsfederabschnitt und dem jeweils abgebogenen Schenkel angeordneten Biegeabschnitt mit einem Innenbiegeradius und einem Außenbiegeradius, wobei der Rohrstabilisator ein Gefüge, insbesondere ein Stahlgefüge, beispielsweise eine Eisen-Kohlenstoff-Legierung, beispielsweise eine Mikrostruktur mit Körnern, insbesondere Gefügekörnern mit einer Korngrößenverteilung und einer mittleren Korngröße, insbesondere Mittelwert der Korngrößenverteilung aufweist, wobei das Gefüge ein Verhältnis zwischen der mittleren Korngröße, insbesondere nach einer Vergütung im Biegeabschnitt des Innenbiegeradius, insbesondere im Scheitelpunkt des Biegeabschnitts des Innenbiegeradius bezogen auf die mittlere Korngröße im Torsionsfederabschnitt, insbesondere in der Mitte des Torsionsfederabschnitts im Bereich von 70% bis 99% oder 70% bis 90%, vorzugsweise im Bereich von 71% bis 79%, besonders bevorzugt im Bereich von 72% bis 78%, ganz besonders bevorzugt im Bereich von 73% bis 77% aufweist.

Ein weiterer Gegenstand der Erfindung ist ein Fahrzeugfahrwerk umfassend einen Rohrstabilisator für ein Fahrzeugfahrwerk, hergestellt aus einem Metallrohrkörper, umfassend einen Torsionsfederabschnitt, zwei von dem Torsionsfederabschnitt abgebogene Schenkel und einen zwischen dem Torsionsfederabschnitt und dem jeweils abgebogenen Schenkel angeordneten Biegeabschnitt mit einem Innenbiegeradius und einem Außenbiegeradius, wobei der Rohrstabilisator ein Gefüge, insbesondere ein Stahlgefüge, beispielsweise eine Eisen-Kohlenstoff-Legierung, beispielsweise eine Mikrostruktur mit Körnern, insbesondere Gefügekörnern mit einer Korngrößenverteilung und einer mittleren Korngröße, insbesondere Mittelwert der Korngrößenverteilung aufweist, wobei das Gefüge ein Verhältnis zwischen der mittleren Korngröße, insbesondere nach einer Vergütung im Biegeabschnitt des Innenbiegeradius, insbesondere im Scheitelpunkt des Biegeabschnitts des Innenbiegeradius bezogen auf die mittlere Korngröße im Torsionsfederabschnitt, insbesondere in der Mitte des Torsionsfederabschnitts im Bereich von 70% bis 99% oder 70% bis 90%, vorzugsweise im Bereich von 71% bis 79%, besonders bevorzugt im Bereich von 72% bis 78%, ganz besonders bevorzugt im Bereich von 73% bis 77% aufweist.

Ein weiterer Gegenstand der Erfindung ist die Verwendung eines Rohrstabilisators für ein Fahrzeugfahrwerk, hergestellt aus einem Metallrohrkörper, umfassend einen Torsionsfederabschnitt, zwei von dem Torsionsfederabschnitt abgebogene Schenkel und einen zwischen dem Torsionsfederabschnitt und dem jeweils abgebogenen Schenkel angeordneten Biegeabschnitt mit einem Innenbiegeradius und einem Außenbiegeradius, wobei der Rohrstabilisator ein Gefüge, insbesondere ein Stahlgefüge, beispielsweise eine Eisen-Kohlenstoff-Legierung, beispielsweise eine Mikrostruktur mit Körnern, insbesondere Gefügekörnern mit einer Korngrößenverteilung und einer mittleren Korngröße, insbesondere Mittelwert der Korngrößenverteilung aufweist, wobei das Gefüge ein Verhältnis zwischen der mittleren Korngröße, insbesondere nach einer Vergütung im Biegeabschnitt des Innenbiegeradius, insbesondere im Scheitelpunkt des Biegeabschnitts des Innenbiegeradius bezogen auf die mittlere Korngröße im Torsionsfederabschnitt, insbesondere in der Mitte des Torsionsfederabschnitts im Bereich von 70% bis 99% oder 70% bis 90%, vorzugsweise im Bereich von 71% bis 79%, besonders bevorzugt im Bereich von 72% bis 78%, ganz besonders bevorzugt im Bereich von 73% bis 77% aufweist, zur Anordnung an einem Fahrzeugfahrwerk.

Die Erfindung kann verwirklicht sein in einem Rohrstabilisator, einem Fahrzeugfahrwerk umfassend einen Rohrstabilisator sowie in der Verwendung eines Rohrstabilisators zur Anordnung an einem Fahrzeugfahrwerk.

### Detaillierte Beschreibung der Erfindung

Im Rahmen der vorliegenden Erfindung wird unter einem Rohrstabilisator ein Bauteil umfassend mindestens ein Metallrohrelement verstanden, bei welchem bei fester Einspannung an beiden Enden, die befestigten Enden gegeneinander eine Schwenkbewegung um die Rohrstabilisatorachse ausführen. Insbesondere findet die mechanische Beanspruchung maßgeblich durch ein tangential zur Rohrstabilisatorachse angreifendes Drehmoment statt. Unter Rohrstabilisatoren werden beispielsweise auch ein gewinkelter Torsionsstab, eine Torsionsfeder, ein Drehstabfeder oder eine Kombination hiervon verstanden.

In einer weiteren Ausführungsform der Erfindung umfasst der Metallrohrkörper eine Mangan-Bor-Stahl-Zusammensetzung umfasst mit einem Kohlenstoffgehalt im Bereich von 0,2 Gewichts-% bis 0,42 Gewichts-% bezogen auf das Gesamtgewicht der Mangan-Bor-Stahl-Zusammensetzung, vorzugsweise im Bereich von 0,24 Gewichts-% bis 0,4 Gewichts-% bezogen auf das Gesamtgewicht des Metallrohrkörpers, insbesondere der Mangan-Bor-Stahl-Zusammensetzung. Beispielsweise ist der Metallrohrkörper, insbesondere die Mangan-Bor-Stahl-Zusammensetzung ausgewählt aus einer Gruppe von borlegierten Vergütungsstählen nach DIN EN 10083, beispielsweise 20MnB5, 26MnB5, 34MnB5, 40MnB5.

Gemäß einer weiteren Ausführungsform der Erfindung ist die mittlere Korngröße, insbesondere ist nach einer Vergütung im Biegeabschnitt die mittlere Korngröße in dem Außenbiegeradius größer als in dem Innenbiegeradius. Insbesondere weist das Gefüge ein Verhältnis zwischen der mittleren Korngröße (insbesondere nach einer Vergütung) im Biegeabschnitt des Außenbiegeradius (OB) (insbesondere im Scheitelpunkt des Biegeabschnitts des Außenbiegeradius (OB)) bezogen auf die mittlere Korngröße im Torsionsfederabschnitt (2) (insbesondere in der Mitte des Torsionsfederabschnitts) im Bereich von 78 % bis 105 %, vorzugsweise im Bereich von 80 % bis 102 %, besonders bevorzugt im Bereich von 83 % bis 100 %, ganz besonders bevorzugt im Bereich von 85 % bis 98 % auf.

Nach einer weiteren Ausführungsform der Erfindung weist der Biegeabschnitt einen Biegewinkel zwischen dem Torsionsfederabschnitt und dem jeweils abgebogenen Schenkel im Bereich von 30° bis 105°, vorzugsweise im Bereich von 35° bis 95°, besonders bevorzugt im Bereich von 45° bis 90° auf.

Im Rahmen der vorliegenden Erfindung wird unter einem Biegewinkel den Weg verstanden, insbesondere gemessen, den der in seiner Lage veränderte Schenkel des Profils beim Abkanten zurückgelegt hat. Es ist der Winkel zwischen der ursprünglich gestreckten Lage der Innenkante des Schenkels und seiner Endlage.

In einer weiteren Ausführungsform der Erfindung ist der Rohrstabilisator mittels einer elektrischen Widerstandserwärmung vergütet, insbesondere der Torsionsfederabschnitt, die zwei von dem Torsionsfederabschnitt abgebogene Schenkel und der zwischen dem Torsionsfederabschnitt und dem jeweils abgebogenen Schenkel angeordneten Biegeabschnitt zeitgleich vergütet sind, insbesondere in einem Arbeitsschritt vergütet sind.

Gemäß einer weiteren Ausführungsform der Erfindung umfasst das Gefüge des Rohrstabilisators teilweise ein martensitisches Gefüge, insbesondere umfasst der Biegeabschnitt ein martensitisches Gefüge beispielsweise ist der Biegeabschnitt aus einem martensitischen Gefüge.

### Kurze Beschreibung der Zeichnungen

Der erfindungsgemäße Rohrstabilisator wird anhand der Zeichnungen erläutert.
- Fig. 1: zeigt schematisch eine Aufsicht eines Rohrstabilisators gemäß dem Stand der Technik,
- Fig. 2: zeigt schematisch einen Längsschnitt durch einen Biegeabschnitt eine Rohstabilisators gemäß Ausführungsformen der Erfindung,
- Fig. 3: zeigt schematisch einen Querschnitt durch einen Biegeabschnitt eine Rohstabilisators gemäß Ausführungsformen der Erfindung,
- Fig. 4: zeigt schematisch einen Querschnitt durch einen Torsionsfederabschnitt eine Rohstabilisators gemäß Ausführungsformen der Erfindung.

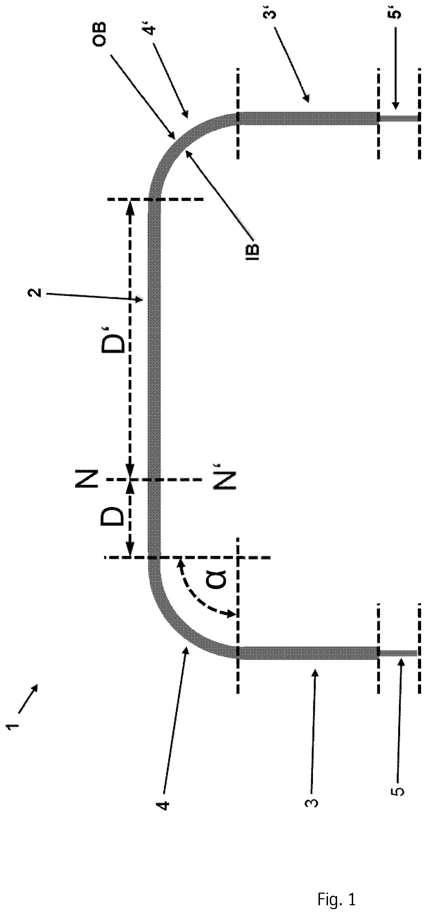

In der Fig. 1 ist schematisch eine Aufsicht eines Rohrstabilisator 1 mit einem Torsionsfederabschnitt 2 und zwei gebogenen Schenkeln 3, 3', welche in Endabschnitten 5, 5', verdeutlicht mit gestrichelten Linien, enden nach dem Stand der Technik dargestellt. Im Bereich zwischen dem Torsionsfederabschnitt 2 und dem jeweilig von dem Torsionsfederabschnitt 2 mit einem jeweiligen Biegewinkel α mit gestrichelten Linien abgebogenen Schenkeln 3, 3' ist ein jeweiliger Biegeabschnitt 4, 4', abgegrenzt durch gestrichelte Linien, dargestellt. An dem jeweiligen Biegeabschnitt 4, 4' ist ein Innenbiegeradius IB und ein Außenbiegeradius OB dargestellt. Der Torsionsfederabschnitt ist je nach Anordnung eines mit gestrichelten Linien dargestellten Schnitts N, N' in Abständen D, D' mit gestrichelten Linien dargestellt.

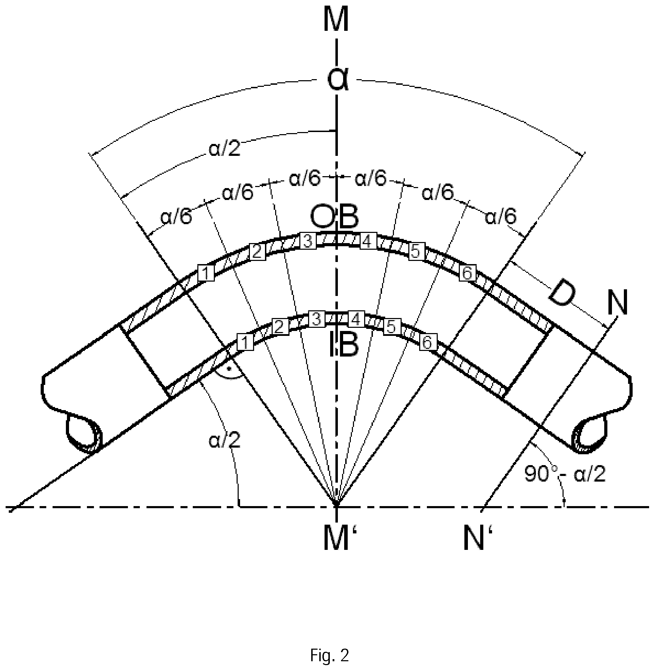

In der Fig. 2 ist schematisch einen Längsschnitt durch einen Biegeabschnitt 4, 4' des Rohstabilisators 1 dargestellt mit dem Biegewinkel α sowie dem Innenbiegeradius IB und dem Außenbiegeradius OB. Probeentnahmestellen sind mit den Nr. 1 bis 6 in umrahmten Quadraten dargestellt. Schnitte M-M' und N, N' sind schematisch dargestellt.

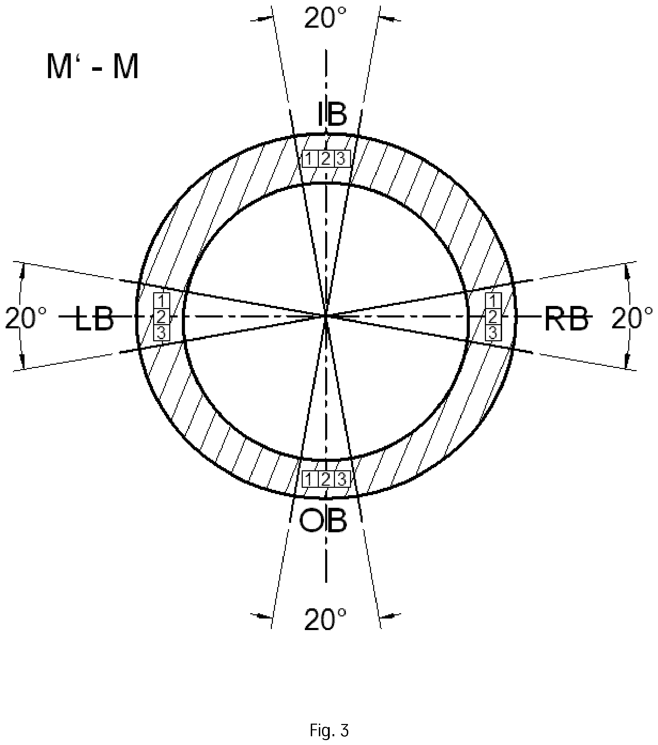

In der Fig. 3 ist schematisch den Schnitt M-M' durch einen Biegeabschnitt 4, 4' des Rohstabilisators 1 dargestellt mit dem Innenbiegeradius IB und dem Außenbiegeradius OB sowie einem linken Biegeradius LB und einem rechten Biegeradius RB. Die jeweiligen Probeentnahmestellen sind mit den Nr. 1 bis 3 in umrahmten Quadraten dargestellt.

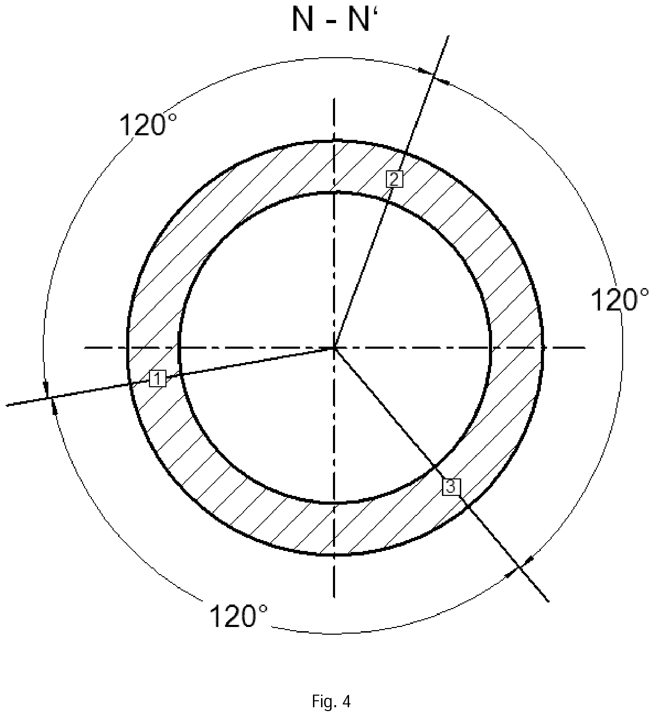

In der Fig. 4 ist schematisch den Schnitt N-N' durch einen Torsionsfederabschnitt 2 des Rohstabilisators 1 dargestellt. Probeentnahmestellen sind mit den Nr. 1 bis 3 in umrahmten Quadraten dargestellt.

### Beispiele:

### 1 Korngrößenbestimmung

### 1.1 Prüfparameter

| | | |
|---|---|---|
| Probenentnahme | | - Schenkelradius 1 Quer |
| | | - Schenkelradius 1 Längs |
| | | - Rückenbereich |
| Mikroskop | Leica Aristomet | |
| Software | dhs Bilddatenbank, Modul für die Korngrößenbestimmung von PixelFerber | |
| Norm | DIN/ASTM | |
| Verfahren | Kreisschnittverfahren | |

### 1.2 Arbeitsanweisung

Die Probenentnahme erfolgte im ersten Schenkelradius der linken Seite. Hierzu standen zwei Rohrstabilisatoren je Widerstandserwärmungsmethode zur Verfügung. Es konnten so jeweils ein Querschliff und ein Längsschliff entnommen werden. Als Referenz wurde zudem im neutralen Rückenbereich ein Querschliff entnommen. Die Probenentnahme/Probenvorbereitung wird folgend Stichpunktartig beschrieben:
- Die angezeichneten Schnittpunkte M-M', N-N` (Abstand D, D' > 50mm) mittels einer Bandsäge entnehmen,
- Vorschleifen der groben Schnittfläche mit einem Bandschleifer welcher ein Schleifpapier der Körnung 80 aufweist,
- Weiteres Nassschleifen per Hand mit Schleifpapier der Körnungen 120, 220, 500, 1200. Nach jedem Schleifpapier ist die Oberfläche der Probe gründlich zu säubern um einen Übertrag von Schmutz auf das nächst feinere Schleifpapier zu vermeiden,
- Polieren der angeschliffenen Oberfläche mit einem geeigneten Poliertuch und 3µm Diamantsuspension. Es wird so lange poliert bis eine spiegelnde Oberfläche ersichtlich ist.

Bei den vergüteten Rohrstabilisatoren liegt ein martensitisches Gefüge vor, weshalb es ratsam ist die polierten Proben einer Wärmebehandlung zu unterziehen. Dies soll die Korngrenzen oxidieren und das Ätzen der Korngrenzen erleichtern. Mögliche Ofeneinstellungen können wie folgt vorgenommen werden:
- Temperatur: 480-550°C,
- Haltezeit: 80-100min.

Nach der Wärmebehandlung kann die Probe direkt in Wasser abgeschreckt werden. Die polierte Oberfläche weist nun eine Oxidschicht auf welche vorsichtig durch polieren entfernt wird.
HINWEIS: Von einer kompletten Entfernung der Oxidschicht ist abzuraten!
Bei der Erzeugung der Korngrenzen kann ein mehrmaliges polieren und ätzen vonnöten sein. Der Wirkbereich des Oxidierens durch die Wärmebehandlung ist sehr oberflächig und könnte durch zu starkes polieren egalisiert werden.

Für das Ätzen können zwei erprobte Mittel verwendet werden:
- Bechet Beaujard wird auf eine Temperatur von 60-70°C gebracht. Die Probe wird für 15-20min geätzt,
- Bei dem Ätzmittel HA ist eine Erwärmung nicht notwendig. Auch hier wird die Probe 15-20 min geätzt.

Nach dem Ätzen wird die Probe gründlich mit Wasser von der Säure befreit. Die Oberfläche wirkt je nach Ätzmittel Kupfern oder schwarz. Diese Schicht wird mit Ethanol und einem Wattebausch mit festem Druck entfernt. Anschließend noch einmal mit Wasser säubern, mit Ethanol das Wasser entfernen und Probe mittels Luftzug trocknen.

Die Probe kann nun im Mikroskop betrachtet werden. Ist das Ergebnis noch nicht ausreichend wird das polieren und ätzen so lange wiederholt, bis die Korngrenzen ersichtlich sind.

Es ist für die Bildaufnahme der Korngrenzen eine geeignete Vergrößerung zu wählen.

HINWEIS: In diesem Bericht wurde für die Vergleichbarkeit der Längsschliffe eine einheitliche Vergrößerung gewählt.

Ist eine Aufnahme bei der gewünschten Vergrößerung getätigt wird durch das Kreisschnittverfahren der DIN EN ISO 643 die Korngröße bestimmt. Diese sollte je nach Bildqualität manuell erstellt werden.

### 1.5 Zusammenfassung der Prüfergebnisse im Querschliff

| Prüfstelle/Korngröße | Elektrische Widerstandserwärmungsmethode 1 | | Elektrische Widerstandserwärmungsmethode 2 | |
|---|---|---|---|---|
| | Messung | Mittelwert | Messung | Mittelwert |
| Rücken | 12,53/11,02/10,23 | 11,26 | 9,98/9,64/11,32 | 10,31 |
| SR1 Innenbiegeradius | 8,08/8,24/8,32 | 8,21 | 6,89/7,29/7,13 | 7,10 |
| SR1 Außenbiegeradius | 11,58/11,02/11,09 | 11,23 | 11,40/11,49/11,58 | 11,49 |
| SR1 links | 9,87/10,28/9,46 | 9,87 | 9,27/8,67/10,03 | 9,32 |
| SR1 rechts | 9,92/10,08/9,92 | 9,97 | 9,64/10,03/9,92 | 9,86 |

### 1.4 Vergleich der Korngröße im Innenbiegeradius

An 3 Stellen (s. bspw. Figur 2) wurden bei 200x Vergrößerung im Bereich des Innenbiegeradius Bilder entnommen.

| Anlage/Korngröße | 1 | 2 | 3 |
|---|---|---|---|
| ELEKTRISCHE WIDERSTANDSERWÄRMUNGSMETHODE 1 | 8,08 | 8,24 | 8,32 |
| ELEKTRISCHE WIDERSTANDSERWÄRMUNGSMETHODE 2 | 6,89 | 7,29 | 7,13 |

### 1.5 Vergleich der Korngröße im Außenbiegeradius

An 3 Stellen (s. bspw. Figur 2) wurden bei 500x Vergrößerung im Bereich des Außenbiegeradius Bilder entnommen.

| Anlage/Korngröße | 1 | 2 | 3 |
|---|---|---|---|
| ELEKTRISCHE WIDERSTANDSERWÄRMUNGSMETHODE 1 | 11,58 | 11,02 | 11,09 |
| ELEKTRISCHE WIDERSTANDSERWÄRMUNGSMETHODE 2 | 11,40 | 11,49 | 11,58 |

### 1.6 Vergleich der Korngröße in den Übergangsbereichen links/rechts

Jeweils an 3 Stellen (s. bspw. Figur 2) wurden bei 500x Vergrößerung im Übergangsbereich links und rechts Bilder aufgenommen.

| Anlage/Korngröße an Messposition | 1 | 2 | 3 |
|---|---|---|---|
| ELEKTRISCHE | 9,87 | 10,28 | 9,46 |
| WIDERSTANDSERWÄRMUNGSMETHODE 1 links | | | |
| ELEKTRISCHE WIDERSTANDSERWÄRMUNGSMETHODE 2 links | 9,27 | 8,67 | 10,03 |
| ELEKTRISCHE WIDERSTANDSERWÄRMUNGSMETHODE 1 rechts | 9,92 | 10,08 | 9,92 |
| ELEKTRISCHE WIDERSTANDSERWÄRMUNGSMETHODE 2 rechts | 9,64 | 10,03 | 9,92 |

### 1.7 Vergleich der Korngrößen im Rückenbereich

Jeweils an 3 Stellen (s. bspw. Figur 3) wurden bei 500x Vergrößerung im Rückenbereich links und rechts Bilder aufgenommen.

### Beispiel der Positionen am Querschliff

| Anlage/Korngröße an Messposition | 1 | 2 | 3 |
|---|---|---|---|
| ELEKTRISCHE WIDERSTANDSERWÄRMUNGSMETHODE 1 | 12,53 | 11,02 | 10,23 |
| ELEKTRISCHE WIDERSTANDSERWÄRMUNGSMETHODE 2 | 9,98 | 9,64 | 11,32 |

### 1.8 Vergleich der Korngrößen im Längsverlauf am Innenbiegeradius

An 6 Stellen (s. bspw. Figur 2) entlang des Längsschliffes wurden im Innenbiegeradius Bilder bei 500x Vergrößerung aufgenommen.

| Anlage/Korngröße an Messposition | 1 | 2 | 3 | 4 | 5 | 6 |
|---|---|---|---|---|---|---|
| ELEKTRISCHE WIDERSTANDSERWÄRMUNGSMETHODE 1 | 9,58 | 8,50 | 8,23 | 8,59 | 9,33 | 9,46 |

| | | | | | | |
|---|---|---|---|---|---|---|
| ELEKTRISCHE WIDERSTANDSERWÄRMUNGSMETHODE 2 | 8,50 | 7,92 | 6,59 | 7,20 | 7,92 | 8,23 |

### 1.9 Vergleich der Korngrößen im Längsverlauf am Außenbiegeradius

An 6 Stellen (s. bspw. Figur 2) entlang des Längsschliffes wurden im Außenbiegeradius Bilder bei 500x Vergrößerung aufgenommen.

| | 1 | 2 | 3 | 4 | 5 | 6 |
|---|---|---|---|---|---|---|
| ELEKTRISCHE WIDERSTANDSERWÄRMUNGSMETHODE 1 | 10,67 | 10,59 | 10,23 | 11,33 | 10,37 | 10,87 |
| ELEKTRISCHE WIDERSTANDSERWÄRMUNGSMETHODE 2 | 10,08 | 11,02 | 10,91 | 10,50 | 10,55 | 10,79 |

### 2 Ergebnis

Aus den Ergebnissen der Untersuchung lassen sich folgende Aussagen treffen:
- Im Rückenbereich zeigt die Vergütung über die ELEKTRISCHE WIDERSTANDSERWÄRMUNGSMETHODE 1-Anlage im Mittel eine Verfeinerung des Korns um ca. den Faktor 1 auf.
- Im Innenbiegeradius zeigt die Vergütung über die ELEKTRISCHE WIDERSTANDSERWÄRMUNGSMETHODE 1-Anlage im Mittel eine Verfeinerung des Korns um ca. den Faktor 1 auf.
- Die Korngrößen im Außenbiegeradius sind vergleichbar.
- Die Übergangsbereiche sind vergleichbar. Beide weisen eine Mischung aus groben und feinen Körner auf.
- Im Längsschliff des Innenbiegeradius zeigt die Vergütung über die ELEKTRISCHE WIDERSTANDSERWÄRMUNGSMETHODE 1-Anlage stellenweise eine Verfeinerung des Korns um ca. den Faktor 2 auf.
- Die Außenbiegeradien im Längsschliff sind vergleichbar.

### Gewerbliche Anwendbarkeit

Rohrstabilisator der vorbeschriebenen Art werden in der Produktion von Fahrzeugen, insbesondere von Fahrwerken der Kraftfahrzeuge eingesetzt.

### Bezugszeichenliste

- 1: = Rohrstabilisator
- 2: = Torsionsfederabschnitt
- 3, 3': = Schenkel
- 4, 4': = Biegeabschnitt
- 5, 5': = Endabschnitt

- IB: = Innenbiegeradius
- OB: = Außenbiegeradius
- α: = Biegewinkel
- LB: = linker Biegeradius von einem Querschnitt
- RB: = rechter Biegeradius
- M-M': = Schnitt schematisch
- N-N`: = Schnitt schematisch
- D, D': = Abstände eines Schnitts N-N' zu den Biegeabschnitten 4, 4'

## Patentansprüche

1. Rohrstabilisator (1) für ein Fahrzeugfahrwerk, hergestellt aus einem Metallrohrkörper, umfassend einen Torsionsfederabschnitt (2), zwei von dem Torsionsfederabschnitt (2) abgebogene Schenkel (3, 3') und einen zwischen dem Torsionsfederabschnitt (2) und dem jeweils abgebogenen Schenkel (3, 3') angeordneten Biegeabschnitt (4, 4') mit einem Innenbiegeradius (IB) und einem Außenbiegeradius (OB), wobei der Rohrstabilisator (1) ein Gefüge mit Körnern mit einer Korngrößenverteilung und einer mittleren Korngröße aufweist,
**dadurch gekennzeichnet, dass**
das Gefüge ein Verhältnis zwischen der mittleren Korngröße im Biegeabschnitt des Innenbiegeradius (IB) bezogen auf die mittlere Korngröße im Torsionsfederabschnitt (2) im Bereich von 70 % bis 99 % oder 70% bis 90%, vorzugsweise im Bereich von 71 % bis 79 %, besonders bevorzugt im Bereich von 72 % bis 78 %, ganz besonders bevorzugt im Bereich von 73 % bis 77 % aufweist.

2. Rohrstabilisator (1) nach Anspruch 1, **dadurch gekennzeichnet, dass** der Metallrohrkörper eine Mangan-Bor-Stahl-Zusammensetzung umfasst mit einem Kohlenstoffgehalt im Bereich von 0,2 Gewichts-% bis 0,42 Gewichts-% bezogen auf das Gesamtgewicht der Mangan-Bor-Stahl-Zusammensetzung, vorzugsweise im Bereich von 0,24 Gewichts-% bis 0,4 Gewichts-% bezogen auf das Gesamtgewicht des Metallrohrkörpers, insbesondere der Mangan-Bor-Stahl-Zusammensetzung.

3. Rohrstabilisator (1) nach einem der Ansprüche 1 bis 2, **dadurch gekennzeichnet, dass** die mittlere Korngröße im Biegeabschnitt in dem Außenbiegeradius (OB) größer ist als in dem Innenbiegeradius (IB).

4. Rohrstabilisator (1) nach einem der Ansprüche 1 bis 3, **dadurch gekennzeichnet, dass** der Biegeabschnitt (4, 4') einen Biegewinkel zwischen dem Torsionsfederabschnitt (2) und dem jeweils abgebogenen Schenkel (3, 3') im Bereich von 30° bis 105°, vorzugsweise im Bereich von 35° bis 95°, besonders bevorzugt im Bereich von 45° bis 90° aufweist.

5. Rohrstabilisator (1) nach einem der Ansprüche 1 bis 4, **dadurch gekennzeichnet, dass** der Rohrstabilisator (1) mittels einer elektrischen Widerstandserwärmung vergütet ist, insbesondere der Torsionsfederabschnitt (2), die zwei von dem Torsionsfederabschnitt (2) abgebogene Schenkel (3, 3') und der zwischen dem Torsionsfederabschnitt (2) und dem jeweils abgebogenen Schenkel (3, 3') angeordneten Biegeabschnitt (4, 4') zeitgleich vergütet sind.

6. Rohrstabilisator (1) nach einem der Ansprüche 1 bis 5, **dadurch gekennzeichnet, dass** das Gefüge des Rohrstabilisators (1) teilweise ein martensitisches Gefüge umfasst.

7. Fahrzeugfahrwerk umfassend einen Rohrstabilisator (1) nach einem der Ansprüche 1 bis 6.

8. Verwendung eines Rohrstabilisators (1) nach einem der Ansprüche 1 bis 6 zur Anordnung an einem Fahrzeugfahrwerk.

## Claims

1. A tubular anti-roll bar (1) for a vehicle chassis, produced from a metal tubular body, comprising a torsion spring portion (2), two limbs (3, 3') bent off from the torsion spring portion (2) and a bending portion (4, 4'), arranged between the torsion spring portion (2) and the respective bent limb (3, 3') and having an inside bending radius (IB) and an outside bending radius (OB), wherein the tubular anti-roll bar (1) has a structure with grains with a grain size distribution and an average grain size,
**characterized in that**
the structure has a ratio between the average grain size in the bending portion of the inside bending radius (IB) in relation to the average grain size in the torsion spring portion (2) in the range of 70% to 99% or 70% to 90%, preferably in the range of 71% to 79%, particularly preferably in the range of 72% to 78%, especially preferably in the range of 73% to 77%.

2. The tubular anti-roll bar (1) as claimed in claim 1, **characterized in that** the metal tubular body comprises a manganese-boron-steel composite with a carbon content in the range of 0.2 % by weight to 0.42 % by weight in relation to the total weight of the manganese-boron-steel composite, preferably in the range of 0.24 % by weight to 0.4 % by weight in relation to the total weight of the metal tubular body, in particular the manganese-boron-steel composite.

3. The tubular anti-roll bar (1) as claimed in one of claims 1 to 2, **characterized in that** the average grain size in the bending portion in the outside bending radius (OB) is greater than in the inside bending radius (IB).

4. The tubular anti-roll bar (1) as claimed in one of claims 1 to 3, **characterized in that** the bending portion (4, 4') has a bending angle between the torsion spring portion (2) and the respective bent limb (3, 3') in the range of 30° to 105°, preferably in the range of 35° to 95°, particularly preferably in the range of 45° to 90°.

5. The tubular anti-roll bar (1) as claimed in one of claims 1 to 4, **characterized in that** the tubular anti-roll bar (1) is tempered by electrical resistance heating; in particular the torsion spring portion, the two limbs (3, 3') bent off from the torsion spring portion (2) and the bending portion (4, 4') arranged between the torsion spring portion (2) and the respective bent limb (3, 3') are tempered at the same time.

6. The tubular anti-roll bar (1) as claimed in one of claims 1 to 5, **characterized in that** the structure of the tubular anti-roll bar (1) in part comprises a martensitic structure.

7. A vehicle chassis comprising a tubular anti-roll bar (1) as claimed in one of claims 1 to 6.

8. The use of a tubular anti-roll bar (1) as claimed in one of claims 1 to 6 for arrangement on a vehicle chassis.

## Revendications

1. Barre antiroulis tubulaire (1) pour châssis de véhicule, fabriquée à partir d'un corps tubulaire métallique, comprenant une partie ressort de torsion (2), deux branches (3, 3') repliées à partir de la partie ressort de torsion (2) et une partie de flexion (4, 4'), disposée entre la partie ressort de torsion (2) et la branche courbée respective (3, 3') et ayant un rayon de courbure intérieur (IB) et un rayon de courbure extérieur (OB), dans laquelle la barre antiroulis tubulaire (1) a une structure avec des grains ayant une distribution de taille de grain et une taille de grain moyenne,
**caractérisée par le fait que**
la structure présente un rapport entre la taille moyenne des grains dans la partie de flexion du rayon de flexion intérieur (IB) et la taille moyenne des grains dans la partie du ressort de torsion (2) compris entre 70 % et 99 % ou entre 70 % et 90 %, de préférence entre 71 % et 79 %, de préférence entre 72 % et 78 %, de préférence encore entre 73 % et 77 %.

2. Barre antiroulis tubulaire (1) selon la revendication 1, **caractérisée en ce que** le corps tubulaire métallique comprend un composite manganèse-bore-acier avec une teneur en carbone comprise entre 0,2 % en poids et 0,42 % en poids par rapport au poids total du composite manganèse-bore-acier, de préférence entre 0,24 % en poids et 0,4 % en poids par rapport au poids total du corps tubulaire métallique, en particulier du composite manganèse-bore-acier.

3. Barre antiroulis tubulaire (1) selon l'une des revendications 1 à 2, **caractérisée par le fait que** la taille moyenne des grains dans la partie de flexion dans le rayon de flexion extérieur (OB) est plus grande que dans le rayon de flexion intérieur (IB).

4. Barre antiroulis tubulaire (1) selon l'une des revendications 1 à 3, **caractérisée par le fait que** la portion de flexion (4, 4') présente un angle de flexion entre la portion de ressort de torsion (2) et la branche de flexion respective (3, 3') compris entre 30° et 105°, de préférence entre 35° et 95°, de préférence encore entre 45° et 90°.

5. Barre antiroulis tubulaire (1) selon l'une des revendications 1 à 4, **caractérisée par le fait que** la barre antiroulis tubulaire (1) est trempée par chauffage par résistance électrique ; en particulier, la partie ressort de torsion, les deux branches (3, 3') courbées à partir de la partie ressort de torsion (2) et la partie courbée (4, 4') disposée entre la partie ressort de torsion (2) et la branche courbée respective (3, 3') sont trempées en même temps.

6. Barre antiroulis tubulaire (1) selon l'une des revendications 1 à 5, **caractérisée par le fait que** la structure de la barre antiroulis tubulaire (1) comprend en partie une structure martensitique.

7. Châssis de véhicule comprenant une barre antiroulis tubulaire (1) selon l'une des revendications 1 à 6.

8. Utilisation d'une barre antiroulis tubulaire (1) selon l'une des revendications 1 à 6 pour l'agencement sur un châssis de véhicule.
